# EUROPEAN PATENT APPLICATION

(11) **EP 1 867 458 A1**
(43) Date of publication of application: **19.12.2007**
(21) Application number: 06730159.8
(22) Date of filing: 28.03.2006
(51) Int. Cl.: B29C 45/33, B29C 45/14, B29L 23/00

(54) **RESIN INJECTION MOLDING APPARATUS AND CYLINDRICAL RESIN PART**

(30) Priority: 07.04.2005 JP 2005110495
(71) Applicant: Calsonic Kansei Corporation, Tokyo 164-8602 (JP)
(72) Inventor: SAITO, Kazuhiro c/o Calsonic Kansei Corporation, Tokyo 164-8602 (JP)
(74) Representative: Grünecker, Kinkeldey, Stockmair & Schwanhäusser Anwaltssozietät
(86) International application number: PCT/JP2006/306211
(87) International publication number: WO 2006/109559

(57) **Abstract**

A slide core (12) is provided with a first core section (13) increasingly inclined in a drafting direction and a second core section (14) decreasingly inclined in the drafting direction. Thus, even when the slide core (12) itself has no draft angle, the first core section (13) is firstly drafted to cause a clearance (D) to an inner surface of a hollow space (10) of a tubular resin member (3). Thereafter, the entire slide core (12) can be easily drafted together with the second core section (14). Since the slide core (12) does not require a draft angle as in the conventional design, the manufactured tubular resin member (3) has a uniform thickness. The first core section (13) and the second core section (14) are engaged at a T-shaped slot (16) and a T-shaped groove (17). Thus, the first core section (13) can be slid in a drafting direction S2 to allow only the first core section (13) to be firstly slid to subsequently allow the second core section (14) to be slid to follow the sliding movement of the first core section (13).

## Description

### Technical Field

The present invention relates to a resin injection molding apparatus for molding a tubular resin member and a tubular resin member.

### Background Art

An instrument panel of an automobile includes in the inside a cross-car beam that is an injection-molded tubular resin member provided along the width of the vehicle. This cross-car beam is used not only as a strength member of a vehicle body but also as an air conditioning duct using an inner hollow space (see Patent Document 1).

A tubular resin member like a cross-car beam is manufactured by an injection molding apparatus. For example, a pair of upper and lower forming dies are used to form a cavity space defining the outer shape of a tubular resin member. The cavity space includes therein a bar-like slide core that defines a hollow space of a tubular resin member and that protrudes therethrough in a horizontal direction. Then, resin material is injected to the cavity space at the outer side of the slide core to form a tubular resin member. Subsequently, the slide core is drafted from the tubular resin member and the tubular resin member is taken out by opening the forming dies. After the removal of the slide core, the resultant tubular resin member includes a hollow space penetrating therethrough.

In order to able to draft the slide core from the tubular resin member, the slide core includes a draft angle of two to three degrees in a direction along which the slide core is drafted. Specifically, the slide core has a tapered shape thicker in the direction along which the slide core is drafted. Thus, the hollow space in the tubular resin member also has a tapered shape to correspond to the slide core. The outer surface of the tubular resin member on the other hand has a straight tubular surface. Thus, the tubular resin member has a thickness declining in the direction along which the slide core is drafted.
[Patent Document 1] Japanese Patent Laid-Open Publication No. 2004-1687

### Disclosure of the Invention

However, the conventional technology as described above causes an uneven thickness of a tubular resin member and thus results in different cooling rates in an injection molding process. This causes a difficult control of the apparatus and an uneven strength which causes stress concentration at a weak part, and thus requires reinforcement.

The present invention has been made in view of the conventional technology as described above. The present invention provides a resin injection molding apparatus and a tubular resin member that can minimize the draft angle of the slide core.

The present invention provides a pair of forming dies that can form a cavity space for defining an outer shape of a tubular resin member; and a slide core that defines a hollow space of the tubular resin member and that can protrude in the cavity space in a sliding direction corresponding to a longitudinal direction of the hollow space. Resin material is injected to the cavity space at the outer side of the slide core while the slide core protruding in the cavity space to mold the tubular resin member to subsequently draft the slide core from the tubular resin member after the formation thereof. The slide core is provided with a first core section and a second core section divided plurally in a direction orthogonal to the sliding direction, the first core section has a divided plane increasingly inclined in a drafting direction and the second core section has a divided plane decreasingly inclined in the drafting direction.

According to the above structure, the slide core is composed of the first core section increasingly inclined in a drafting direction and the second core section decreasingly inclined in the drafting direction. Thus, even when the slide core itself has no draft angle, the first core section is firstly drafted to cause a clearance to an inner surface of a hollow space of a tubular resin member. Thereafter, the entire slide core can be easily drafted together with the second core section. Since the slide core does not require a draft angle as in the conventional design, the manufactured tubular resin member has a uniform thickness.

In a preferred illustrative embodiment of the present invention, an engagement connection section may be formed that is provided at divided planes of the first core section and the second core section slidable to each other and that limits the relative movement amount of the first and second cores in the sliding direction while the sliding status is maintained, this engagement connection section may allow the first core section to be movable in the sliding direction and the second core section follows the movement of the first core section.

According to the above structure, the relative movement amount of the first core section and the second core section is limited while the first core section and the second core section maintain the sliding status. Thus, the first core section is slid in a drafting direction to allow only the first core section to be firstly slid to subsequently allow the second core section to be slid to follow the sliding movement of the first core section. Thus, a clearance can be firstly formed to the inner surface of the hollow space to subsequently draft the entire slide core. Even when the slide core is protruded, a mere protrusion of the first core section can cause the entire slide core to protrude.

In the above structure, a projection pin may be formed that protrudes from a forming die in a direction orthogonal to the sliding direction to form an opening in the tubular resin member.

According to the above structure, the tubular resin member can include an opening through which air conditioning air can be blown for example.

In the above structure, the projection pin may protrude to a hollow space of the tubular resin member so that the side face of the projection pin is abutted with at least one of tip ends of the first core section and the second core section and an engagement retention section is formed between the side surface of the projection pin and at least one of tip ends of the first core section and the second core section.

According to the above structure, the side surface of the projection pin protruding to the hollow space is engaged with the tip end of the first core section or the second core section. Thus, the slide core is prevented from being inclined or dislocated even when the slide core receives a pressure by resin material flowing during an injection molding process.

In the above structure, resin material may be injected to the cavity space at the outer side of the slide core while a previously-molded component that is made of resin or is not made of resin is inserted to the cavity space.

According to the above structure, a tubular resin member inserted with a previously-molded component can be obtained.

According to another aspect of the present invention, a tubular resin member is provided that is manufactured by using the above resin injection molding apparatus.

According to the above structure, a tubular resin member manufactured by using the above-described resin injection molding apparatus can have a uniform thickness and thus can be used in any field.

### Brief Description of the Drawings

Fig. 1 is a cross-sectional view illustrating a resin injection molding apparatus according to the first illustrative embodiment of the present invention.
Fig. 2 is an expanded schematic side view illustrating only a side core of Fig. 1.
Fig. 3 is a cross-sectional view taken along the line SA-SA shown by the arrow of Fig. 2.
Fig. 4 is a cross-sectional view corresponding to Fig. 1 in which resin material is injected.
Fig. 5 is a cross-sectional view illustrating the first core section slid relative to the second core section after the status shown in Fig. 4.
Fig. 6 is a cross-sectional view illustrating the entire slide core is slid in a drafting direction after the status shown in Fig. 5.
Fig. 7 is a cross-sectional view illustrating the die opened after the status shown in Fig. 6.
Fig. 8 is a cross-sectional view illustrating a tubular resin member removed by an ejector pin after the status shown in Fig. 6.
Fig. 9 is an expanded cross-sectional view illustrating the tubular resin member taken out after the status shown in Fig. 8.
Fig. 10 is a cross-sectional view illustrating a resin injection molding apparatus according to the second illustrative embodiment of the present invention.
Fig. 11 is an expanded cross-sectional view illustrating a tubular resin member taken out after the status shown in Fig. 10.
Fig. 12 is a cross-sectional view illustrating a resin injection molding apparatus according to the third illustrative embodiment of the present invention.
Fig. 13 is an expanded cross-sectional view illustrating the tubular resin member taken out after the status shown in Fig. 12.

### Best Mode for Carrying out the Invention

Hereinafter, an embodiment of the present invention will be described with reference to the drawings.

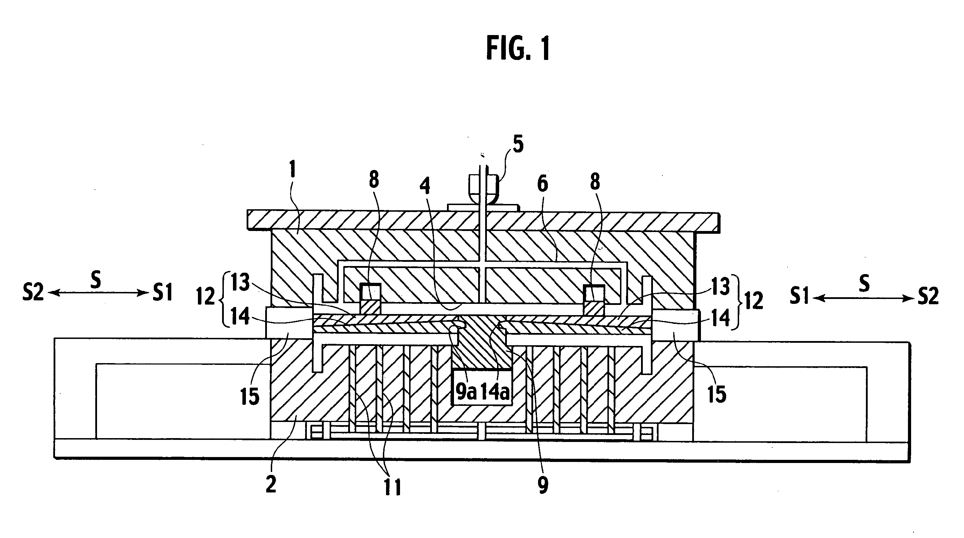

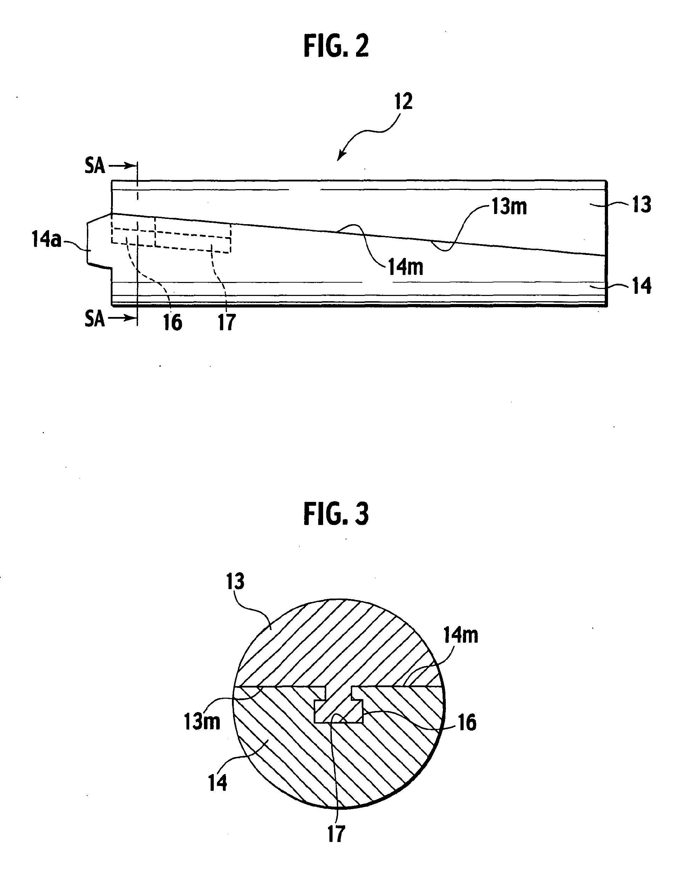

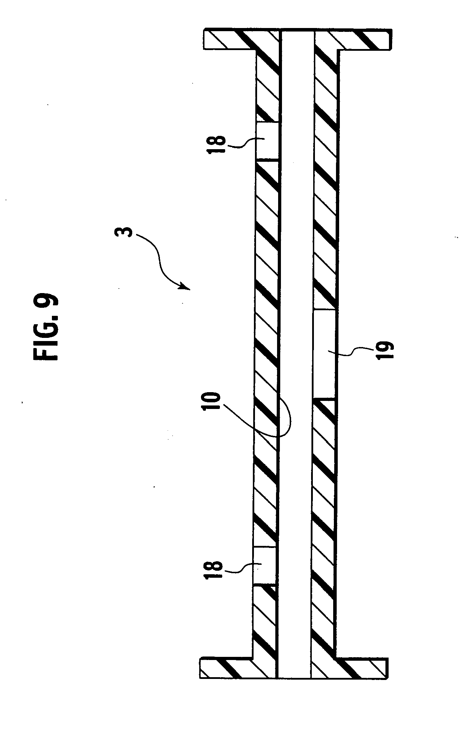

Fig. 1 to Fig. 9 illustrate a metal mold structure used as a part of a resin injection molding apparatus according to the first illustrative embodiment of the present invention. This metal mold structure includes an upper die (forming die) 1 and a lower die (forming die) 2. The upper die 1 moves in an up-and-down direction. The upper die 1 and the lower die 2 have therebetween a cavity space 4 that corresponds to the outer shape of a tubular resin member 3 when the die is closed.

The upper die 1 includes a cylinder 5. Through the cylinder 5, resin material 7 can be injected via a resin flow path 6 into the cavity space 4. The upper die 1 has two projection pins 8 that protrude in the cavity space 4 by a distance corresponding to the thickness of the tubular resin member 3.

The lower die 2 has one large projection pin 9 at the center. This projection pin 9 protrudes in the cavity space 4 to a part corresponding to a hollow space 10 of the tubular resin member 3. A side face of this projection pin 9 has a concave section (engagement retention section) 9a. The lower die 2 has a plurality of ejector pins 11 that protrude into the cavity space 4 when the die is opened.

At both left and right sides of the cavity space 4, slide cores 12 are provided that can be moved in a sliding direction S corresponding to the longitudinal direction of the cavity space 4, respectively. The sliding direction S is composed of a protruding direction S1 and a drafting direction S2. The slide core 12 is composed of the first core section 13 and the second core section 14 divided in an up-and-down direction orthogonal to the sliding direction S. The slide core 12 has an outer shape that is composed of the first core section 13 and the second core section 14 and that is a substantially circular cylinder-like shape. The slide core 12 has a draft angle limited within a range of 0 to 1 degree in the drafting direction S2. At a tip end of the second core section 14, a convex section (engagement retention section) 14a is provided that corresponds to a concave section 9a of the projection pin 9.

The first core section 13 has a thick base end section and has a thickness that increases in the drafting direction S2. The second core section 14 has a thin base end section and has a thickness that decreases in the drafting direction S2. The base end section of the first core section 13 is coupled to a moving die 15 defining a part of the cavity space 4 and moves together with the moving die 15. The first core section 13 is coupled to the moving die 15 so that the first core section 13 can be moved in an up-and-down direction to the moving die 15.

The first core section 13 and the second core section 14 have therebetween divided planes 13m and 14m that can be slid to each other and that are inclined. The divided plane 13m has an angle increasing in the drafting direction S2 and the divided plane 14m has an angle decreasing in the drafting direction S1. The divided plane 13m of the first core section 13 has a T-shaped slot (engagement connection section) 16 provided in the same direction as that of the divided plane 13m. The divided plane 14m of the second core section 14 has a T-shaped groove (engagement connection section) 17 having a predetermined length that is provided in the same direction as that of the divided plane 14m. When the T-shaped slot 16 is engaged with the T-shaped groove 17, the divided planes 13m and 14m of the first core section 13 and the second core section 14 are continuously slid to each other and the second core section 14 can be moved relative to the first core section 13 within the range of the length of the T-shaped groove 17. When the T-shaped slot 16 is abutted to an end section of the T-shaped groove 17, the second core section 14 cannot have a further relative movement and is moved together with the first core section 13.

Next, a procedure for manufacturing a cross-car beam as the tubular resin member 3 by using this resin injection molding apparatus will be described.

### Die closing (see Fig. 1)

The upper die 1 is closed to the lower die 2 to form the cavity space 4. A projection pin 8 at the upper side and a projection pin 6 at the lower side are caused to protrude into the cavity space 4, respectively. Next, the slide cores 12 are caused to protrude into the cavity space 4, respectively. The slide cores 12 are structured so that the first core section 13 can be merely protruded to move the first core section 13 and the second core section 14 together by the engagement of the T-shaped slot 16 and the T-shaped groove 17. A convex section 14a at the tip end of the second core section 14 is engaged with the Concave section 9a at the side face of the projection pin 9.

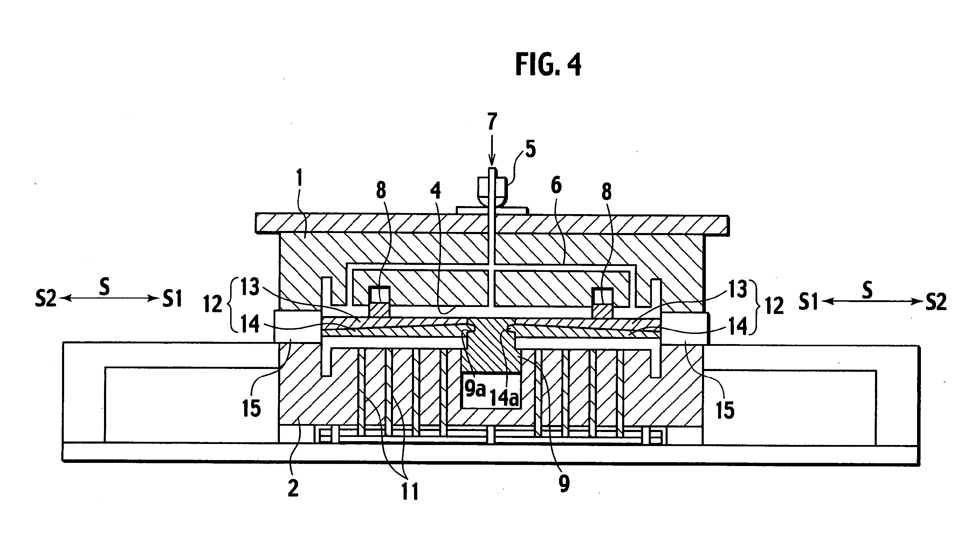

### Resin filling (see Fig. 4)

The resin material 7 is sent from the cylinder 5 via the resin flow path 6 into the cavity space 4 at the outer side of the slide core 12. Since the convex section 14a at the tip end of the second core section 14 is engaged with the concave section 9a at the side face of the projection pin 9, the slide core 12 is prevented from being inclined or dislocated even when the slide core 12 receives a pressure caused by the resin material 7 flowing during an injection molding process.

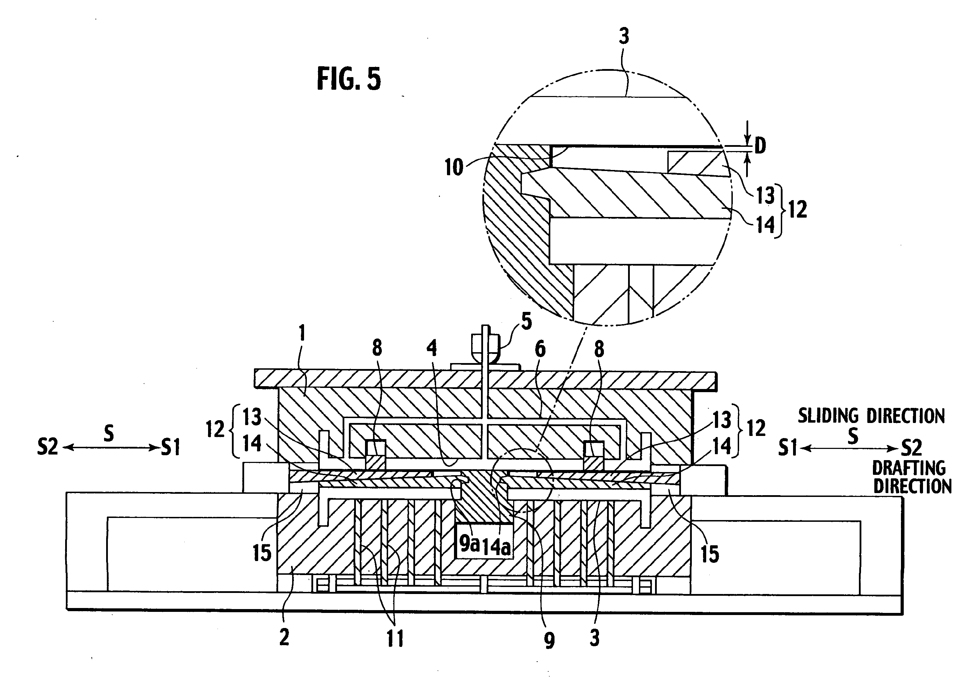

### Initial operation of slide core (Fig. 5)

After the resin material 7 in the cavity space 4 is cooled and solidified to form the tubular resin member 3, the first core section 13 of the slide core 12 is slid in the drafting direction S2. Then, the first core section 13 is moved relative to the second core section 14 in the drafting direction S2 by a distance within which the T-shaped slot 16 can move within the T-shaped groove 17. The relative movement of the first core section 13 causes the first core section 13 to have a clearance D to the inner face of the hollow space 10.

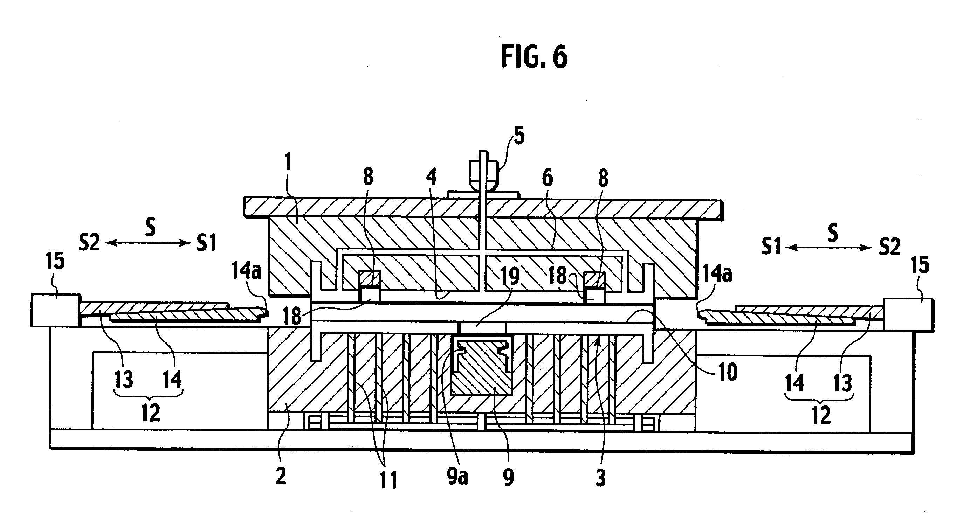

### Drafting movement of slide core (Fig. 6)

After the formation of the clearance D between the first core section 13 and the inner face of the hollow space 10, the entire slide core 12 is moved in the drafting direction S2 and is positioned at the outer side of the cavity space 4. The existence of the clearance D can allow the slide core 12 to be drafted smoothly. The projection pins 8 and 9 are also stored in the upper die 1 and the lower die 2.

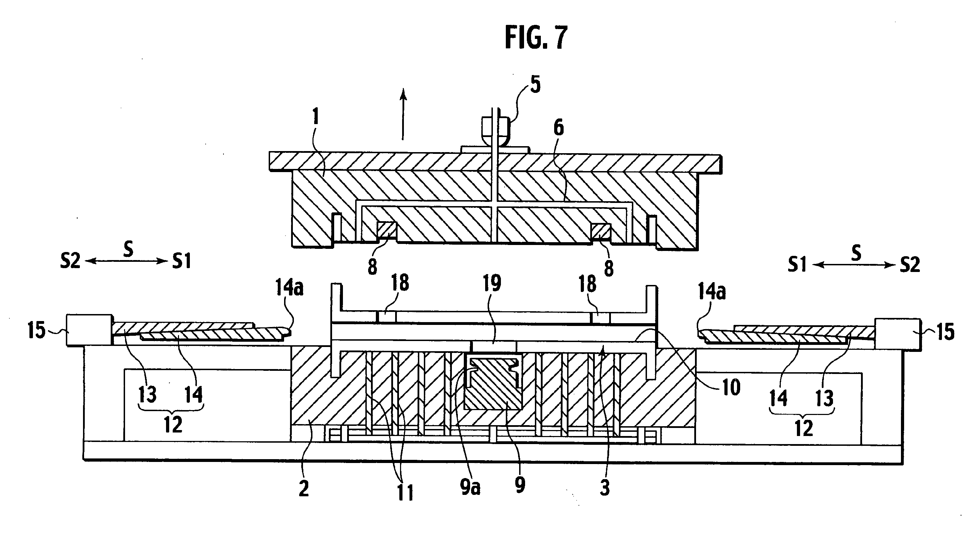

### Die opening (Fig. 7)

Next, the upper die 1 is moved to the upper side and the die is opened. The upper part of the tubular resin member 3 has two openings 18. This opening 18 can be used as an opening through which air conditioning air can be blown. The lower side of the tubular resin member 3 has one opening 19. This opening 19 is used for the connection to an air conditioning unit.

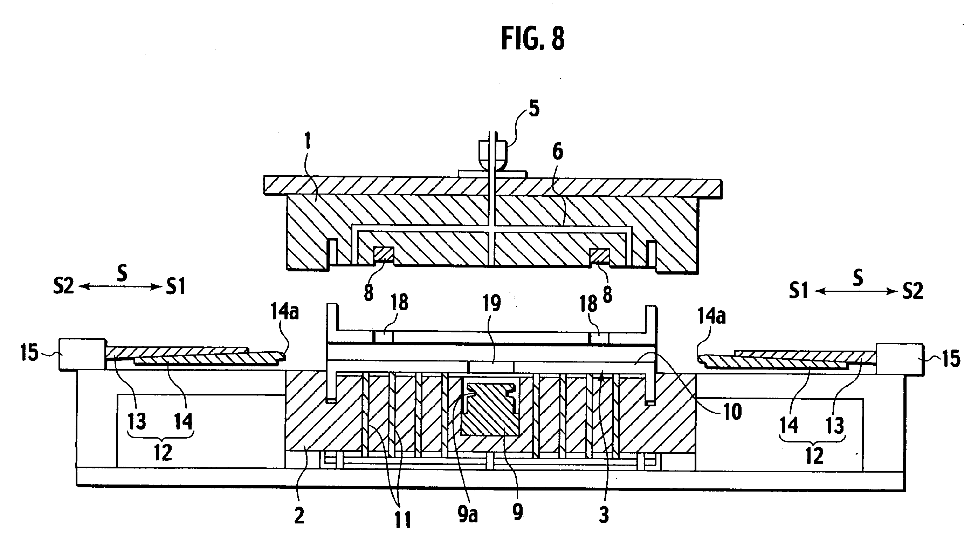

### Removal of product (Fig. 8)

Finally, the ejector pins 11 are caused to protrude in the upward direction to remove the tubular resin member 3 from the lower die 2. The resultant tubular resin member 3 is used as a cross-car beam and is fixed to a vehicle body. The hollow space 10 at the interior is used as a path through which air conditioning air passes. The draft angle of the hollow space 10 is limited to a range of 0 to 1 degree. Thus, the tubular resin member 3 has a substantially equal thickness.

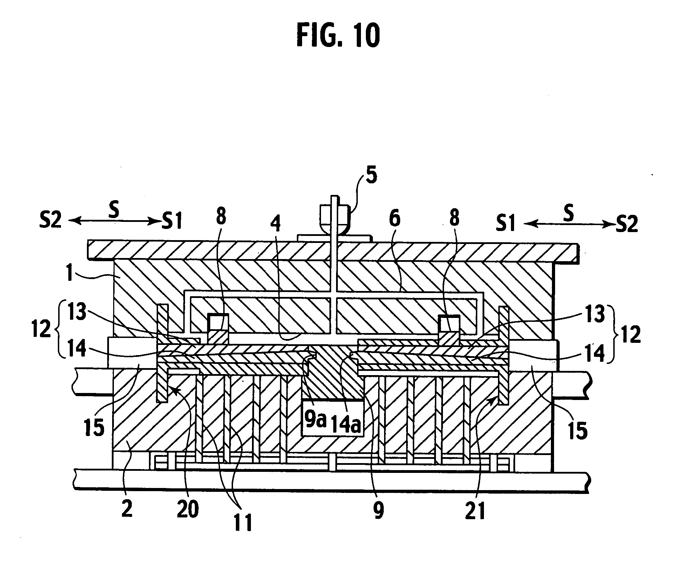

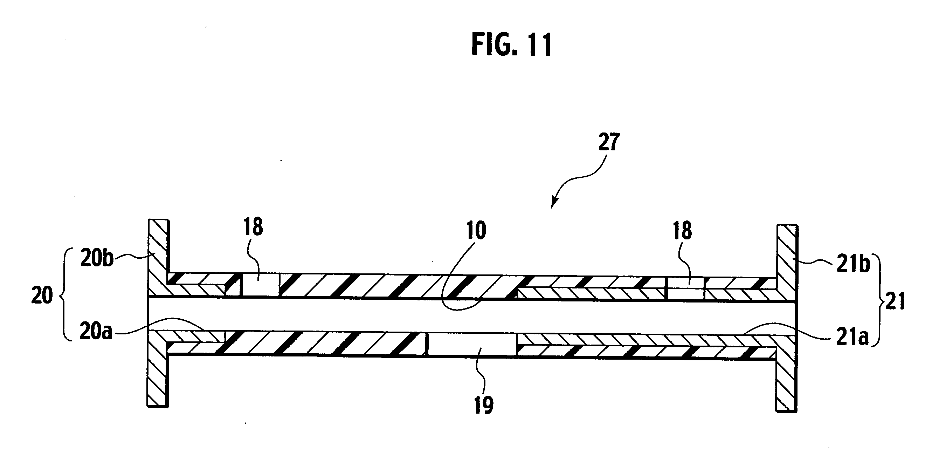

Fig. 10 and Fig. 11 show the second illustrative embodiment of the present invention. In this illustrative embodiment, previously-molded metal components 20 and 21 are inserted to the inner part of the cavity space 4 to mold the cavity space 4. The molded components 20 and 21 are composed of tubular sections 20a and 21a as well as flange sections 20b and 21b constituting the inner surface of the hollow space 10. In the resultant tubular resin member 27, the right molded component 21 of the left and right molded components 20 and 21 that corresponds to a driver's seat has a long tubular section 21a in order to increase the strength. The other structures and effects are the same as those of the previously-described illustrative embodiment and thus are denoted with the same reference numerals and will not be described further.

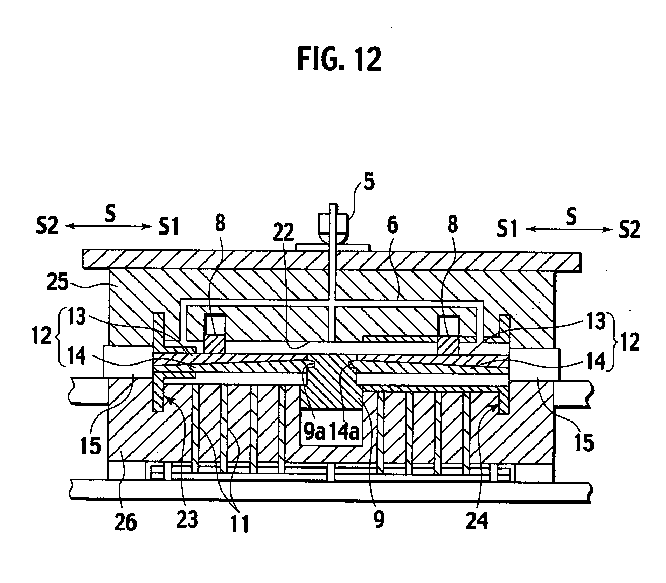

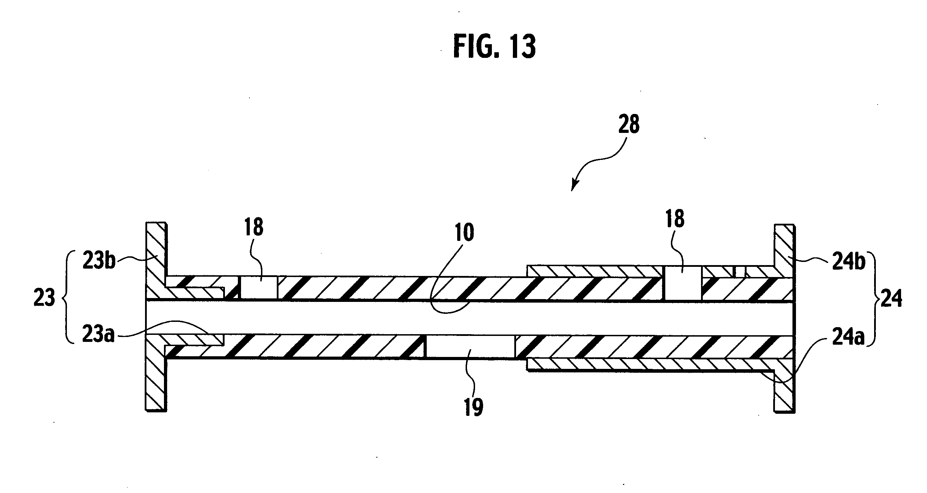

Fig. 12 and Fig. 13 illustrate the third illustrative embodiment of the present invention. In this illustrative embodiment, previously molded metal components 23 and 24 are also inserted to the inside of the cavity space 22 to mold the cavity space 22. The molded components 23 and 24 are composed of tubular sections 23a and 24a as well as flange sections 23b and 24b. In the resultant tubular resin member 28 however, the tubular sections 23a and 24a are externally attached to the surface of the tubular resin member 28. Thus, the upper die 25 and the lower die 26 of this illustrative embodiment are different from those of the previous illustrative embodiment in that the cavity space 22 is expanded in proportion to the tubular sections 23a and 24a of the molded components 23 and 24. The other structures and effects are the same as those of the previously-described illustrative embodiment and thus are denoted with the same reference numerals and will not be described further.

### Industrial Applicability

In the respective illustrative embodiments as described above, a case has been illustrated in which the first core section 13 movable in the sliding direction S is at the upper side of the second core section 14. However, the first core section 13 also may be at the lower side of the second core section 14. The above illustrative embodiments also have described a case where the slide core 12 is divided to two parts. However, the slide core 12 also may be divided to three or more parts. Furthermore, the projection pin 9 also may not be used and one of the tip end of the first core section 13 or the second core section 14 may have a concave section corresponding to the concave section 9a and the other may have a convex section suited to the concave section 9a so that the concave section and convex section corresponding to engagement retention sections can be directly engaged by the concave and convex shapes to improve the positional accuracy of the tip end for preventing the dislocation due to an injection pressure.

## Claims

1. A resin injection molding apparatus comprising:
a pair of forming dies that can form a cavity space for defining an outer shape of a tubular resin member; and
a slide core that defines a hollow space of the tubular resin member and that can protrude in the cavity space in a sliding direction corresponding to a longitudinal direction of the hollow space,
wherein resin material is injected to the cavity space at the outer side of the slide core while the slide core protruding in the cavity space to mold the tubular resin member to subsequently draft the slide core from the tubular resin member after the formation thereof,
and wherein the slide core includes a first core section and a second core section divided plurally in a direction orthogonal to the sliding direction, the first core section has a divided plane increasingly inclined in a drafting direction and the second core section has a divided plane decreasingly inclined in the drafting direction.

2. The resin injection molding apparatus according to Claim 1, wherein:
an engagement connection section is formed that is provided at divided planes of the first core section and the second core section slidable to each other and that limits the relative movement amount of the first and second cores in the sliding direction while the sliding status is maintained, this engagement connection section allows the first core section to be movable in the sliding direction and the second core section follows the movement of the first core section.

3. The resin injection molding apparatus according to Claim 1, wherein:
a projection pin is formed that protrudes from a forming die in a direction orthogonal to the sliding direction to form an opening in the tubular resin member.

4. The resin injection molding apparatus according to Claim 3, wherein:
the projection pin protrudes to a hollow space of the tubular resin member so that the side face of the projection pin is abutted with at least one of tip ends of the first core section and the second core section and an engagement retention section is formed between the side surface of the projection pin and at least one of tip ends of the first core section and the second core section.

5. The resin injection molding apparatus according to Claim 1, wherein:
resin material is injected to the cavity space at the outer side of the slide core while a previously-molded component that is made of resin or is not made of resin is inserted to the cavity space.

6. A tubular resin member, being manufactured by using the resin injection molding apparatus according to Claim 1.
